# EUROPEAN PATENT APPLICATION

(11) **EP 4 586 665 A1**
(43) Date of publication of application: **16.07.2025**
(21) Application number: 22958069.1
(22) Date of filing: 06.09.2022
(51) Int. Cl.: H04W 16/04, H04W 16/28, H04W 52/02, H04W 92/12

(54) **CONTROL APPARATUS, CONTROL METHOD, AND PROGRAM**

(71) Applicant: NIPPON TELEGRAPH AND TELEPHONE CORPORATION, Chiyoda-ku, Tokyo 100-8116 (JP)
(72) Inventor: IWAMOTO, Masayoshi, Musashino-shi, Tokyo 180-8585 (JP); KOBAYASHI, Masahiro, Musashino-shi, Tokyo 180-8585 (JP); HARADA, Shigeaki, Musashino-shi, Tokyo 180-8585 (JP)
(74) Representative: Murgitroyd & Company
(86) International application number: PCT/JP2022/033415
(87) International publication number: WO 2024/052990

(57) **Abstract**

A control apparatus in a wireless communication system including a plurality of base stations that autonomously performs sleep control for each carrier includes: an estimation unit that estimates whether or not each carrier is in a sleep state based on a traffic load estimated for each carrier; and a calculation unit that calculates, based on an estimation result by the estimation unit, a tilt control solution indicating a tilt for each carrier to be controlled so as to reduce power consumption in the plurality of base stations.

## Description

### Technical Field

The present invention relates to a technique for controlling a plurality of base stations in a wireless communication system.

### Background Art

A base station in a wireless communication system (which may also be referred to as a mobile communication system) generally includes a plurality of antennas and covers an area by using a certain frequency band (carrier) for each antenna. Each area is generally covered by a plurality of carriers, and thus a large volume of traffic can be accommodated.

In recent years, efforts to reduce energy consumption have been made in various fields. In the wireless communication system, for the purpose of power saving of base stations, there has been studied a sleep control technique for stopping carriers (performing sleep) in some base stations in a time period/area having a small traffic demand to reduce power consumption (Non-Patent Literature 1).

### Citation List

### Non-Patent Literature

Non-Patent Literature 1: Y. Gao, Y. Li, H. Yu, X. Wang and S. Gao, "Energy efficient joint optimization of electric antenna tilt and transmit power in 3GPP LTE-Advanced: A system level result", 2013 IEEE 9th International Colloquium on Signal Processing and its Applications, 2013, pp. 135-139, doi:10.1109/CSPA.2013.6530029.

### Summary of Invention

### Technical Problem

However, the related art disclosed in Non-Patent Literature 1 has a low power consumption reduction effect.

The present invention has been made in view of the above points, and an object thereof is to provide a technique for obtaining a high power consumption reduction effect in power saving of base stations.

### Solution to Problem

According to the disclosed technique, there is provided a control apparatus in a wireless communication system including a plurality of base stations that autonomously performs sleep control for each carrier, the control apparatus including: an estimation unit that estimates whether or not each carrier is in a sleep state based on a traffic load estimated for each carrier; and a calculation unit that calculates, based on an estimation result by the estimation unit, a tilt control solution indicating a tilt for each carrier to be controlled so as to reduce power consumption in the plurality of base stations.

### Advantageous Effects of Invention

According to the disclosed technique, there is provided a technique for obtaining a high power consumption reduction effect in power saving of base stations.

### Brief Description of Drawings

[Fig. 1] Fig. 1 is a configuration diagram of a system in an embodiment of the present invention.
[Fig. 2] Fig. 2 is a configuration diagram of a base station control apparatus.
[Fig. 3] Fig. 3 is a flowchart showing an operation of a base station control apparatus in Example 1.
[Fig. 4] Fig. 4 is a flowchart showing an operation of a base station control apparatus in Example 3.
[Fig. 5] Fig. 5 shows a hardware configuration example of a device.

### Description of Embodiments

Hereinafter, an embodiment of the present invention (present embodiment) will be described with reference to the drawings. The embodiment to be described below is merely an example, and embodiments to which the present invention is applied are not limited to the following embodiment.

An "antenna" and a "carrier" used by a base station of the present embodiment will be described. The base station includes a plurality of antennas, and each antenna covers communication in a specific orientation. The antenna has a plurality of carriers, and each carrier of a certain antenna covers communication in a specific frequency band in an area in the same orientation. At this time, a tilt (angle of depression) is set to each carrier, and, when the angle is different, a coverage area is also different.

In the present embodiment, it is assumed that the carriers are classified into two types: a "carrier for completely covering each area" (coverage carrier) and a "carrier prepared for an area having a high traffic demand in addition to the coverage carrier" (capacity carrier). Note that the technique according to the present invention is applicable even in a case where the carriers are not classified into those two types.

Names of reference literatures corresponding to numbers (e.g. [2]) of the reference literatures, which will be referred to in the following description, will be collectively described at the end of the description. Note that Reference Literature [1] is Non-Patent Literature 1 described above.

Hereinafter, first, power saving and problems of the technique according to the present embodiment will be described, and then the technique according to the present embodiment will be described in detail. In the following description, contents disclosed in the reference literatures are publicly known, but descriptions other than the contents disclosed in the reference literatures (such as problems regarding the contents disclosed in the reference literatures) are not publicly known.

### (Power Saving)

As described above, in a wireless communication system, for the purpose of power saving of base stations, there has been studied a sleep control technique for stopping carriers (performing sleep) in some base stations in a time period/area having a small traffic demand to reduce power consumption (Non-Patent Literature 1).

Generally, sleep control is autonomously performed on a base station basis according to a traffic load or the like (Reference Literature [2]). The technique disclosed in Reference Literature [2] sets a certain threshold to the traffic load and performs sleep when the traffic load falls below the threshold. The threshold for determining whether to perform sleep is referred to as a sleep threshold.

A range of sleep can be, in descending order, sleep in an entire base station including all the carriers, sleep in units of carriers, sleep in units of resource blocks (RBs), or the like. Note that RBs are obtained by dividing a carrier on a frequency axis and a time axis, and two RBs are allocated to each terminal for communication. Sleep control can be controlled at shorter time intervals than tilt control, and switching within one second has been studied in each kind of control.

When the traffic load of the base station increases, communication quality of terminals connected thereto may deteriorate. Meanwhile, in a situation in which the traffic loads of base stations are evenly distributed, there is a possibility that the traffic load of any base station does not fall below the sleep threshold, and thus sleep is not executed. In such a situation, it is difficult to reduce power consumption of the base stations.

Meanwhile, for the purpose of reducing power consumption, there is an approach of controlling the tilt of the antenna of the base station to change the coverage area of each carrier. When the coverage area is changed, the number of terminals accommodated in each carrier, that is, the traffic load, can be changed. By appropriately adjusting the traffic load, it is possible to reduce the traffic loads of some carriers and cause the some carriers to be in a sleep state within a range in which the traffic loads of all carriers do not exceed capacity of the carriers.

Tilt control can be changed by a central controller in units of several minutes to several hours. Meanwhile, regarding sleep control, in order to achieve sleep control in a short time as described above, it is preferable to perform autonomous decentralized control on a base station basis instead of collective control by the central controller.

### (Problems)

Next, the related art and its problems will be described in detail.

### (1) Related Art and Its Problem 1

The technique disclosed in Reference Literature [1] changes parameters of base stations such as a tilt and transmission power to cause some base stations to sleep and also suppress deterioration in communication quality of terminals near the base stations. This method is based on the premise that the central controller collectively controls sleep and tilt control of the base stations.

Therefore, as compared with a case where the base station autonomously performs sleep control, the control is reflected slowly and cannot be performed with a fine granularity. Accordingly, the frequency of the control is lower than that of the autonomous sleep control, which misses an opportunity to sleep, and thus power consumption may increase.

### (2) Related Art and Its Problem 2

The technique disclosed in Reference Literature [1] changes the tilt and transmission power of all the carriers without distinguishing roles of carriers such as the coverage carrier and the capacity carrier. Therefore, depending on an estimation error of the communication quality or accuracy of a control solution, an area that is not covered by any carrier (coverage hole) may be partially generated.

### (3) Related Art and Its Problem 3

The technique disclosed in Reference Literature [1] calculates parameters for improving the communication quality of the terminals after a base station to be stopped is determined by some method. However, the communication quality of the terminals greatly depends on the base station to be stopped. Therefore, there is a possibility that the communication quality cannot be secured depending on a method of selecting a base station to be stopped.

### (Overview of Technique According to Embodiment)

The above problems 1 to 3 are solved by a base station control apparatus 100 described later. First, an overview of the base station control apparatus 100 will be described.

A wireless communication system to be controlled by the base station control apparatus 100 is assumed to perform sleep control in which each carrier of each base station autonomously stops according to a traffic load. In the present embodiment, it is assumed that each carrier sleeps based on the sleep model disclosed in Reference Literature [2] as an example.

In the model of Reference Literature [2], for example, when the number of users accommodated in a base station falls below a sleep threshold calculated in advance, the base station transitions to a sleep state, and, when the number of users exceeds the sleep threshold again, the base station transitions to an operating state.

In the present embodiment, a value of the traffic load is used as the sleep threshold. In the present embodiment, for example, when the traffic load of a certain carrier falls below the sleep threshold, the carrier transitions to a sleep state (stops), and, when the traffic load becomes equal to or larger than the sleep threshold, the carrier transitions to an operating state. Note that the sleep model using the sleep threshold is an example.

The base station control apparatus 100 receives, as an input, information described later in the description of an input reception unit 110 and transmits, as an output, a combination of tilts of all carriers to be controlled (referred to as a tilt control solution). Therefore, the tilt is changed for each carrier to be controlled.

In the present embodiment, in order to prevent a coverage hole from being generated due to a change in tilt, a tilt of a carrier other than a redundant carrier is not controlled. That is, a tilt of the redundant carrier is controlled. A method of selecting the redundant carrier will be described later.

Note that the traffic load and the like are calculated for all carriers including the redundant carrier and the other carriers, and control is performed based on the calculation.

In calculation of the tilt control solution, an objective function described later is used to obtain a solution that maximizes a power consumption reduction effect of the base stations while ensuring the communication quality of each area.

### (Features (Points) of Technique According to Embodiment)

Features (points) of the technique according to the present embodiment are as follows. Note that the following points are points in the technique of the embodiment, and the invention is not required to include all the points.

### <Point 1>

To cope with a situation in which tilt control and sleep control operate independently, tilt control based on estimation of a sleep state using a sleep model is performed.

### <Point 2>

Minimum necessary carriers are selected in advance to cover all areas, and tilt control is performed on the other carriers (redundant carriers). As the redundant carriers, all carriers other than the coverage carriers may be selected.

### <Point 3>

In the objective function used in optimization of tilt control, "the number of carriers exceeding a threshold (quality deterioration threshold) of whether or not the traffic load affects deterioration in the communication quality" is used as a penalty term in addition to a "power reduction effect of each carrier".

### (Effects of Technique According to Embodiment)

The technique according to the present embodiment having the above points has the following effects.

### <Effect 1>

According to the point 1, autonomous sleep control is performed on a base station basis, and thus it is possible to implement sleep control with a fine granularity and effectively reduce power consumption. This solves the problem 1.

### <Effect 2>

According to the point 2, it is possible to cover all areas and to ensure that a coverage hole is not generated regardless of a result of tilt control. This solves the problem 2.

### <Effect 3>

According to the points 2 and 3, it is possible to implement control such that the traffic loads of all carriers are not excessive. This makes it possible to reduce power consumption while ensuring communication quality of terminals. This solves the problem 3.

### (Overall Configuration of System)

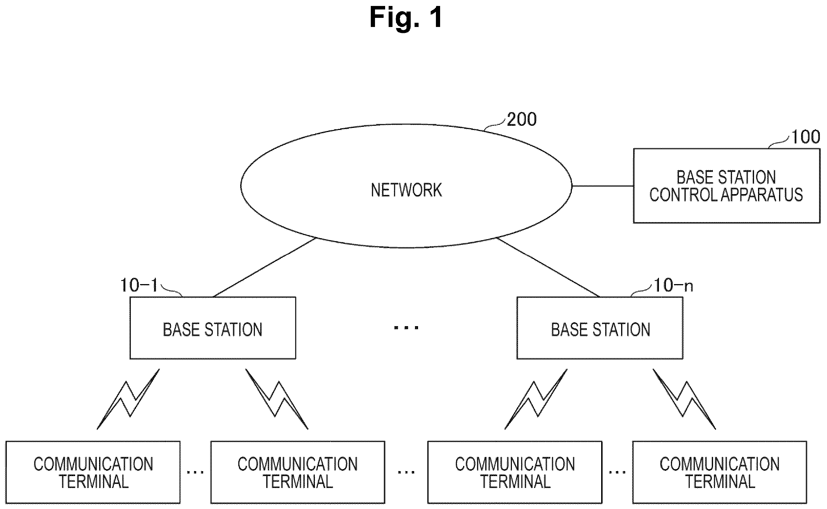

Fig. 1 shows an overall configuration example of the wireless communication system in the present embodiment. As shown in Fig. 1, the system according to the present embodiment has a configuration in which a plurality of base stations 10 and the base station control apparatus 100 are connected to a network 200. The network 200 is, for example, a network including a mobile core network. Communication terminals exist under the control of each base station, and each communication terminal wirelessly communicates with the base station. Each base station autonomously performs sleep control for each carrier on the basis of the sleep threshold.

Hereinafter, a configuration and operation of the base station control apparatus 100 according to the present embodiment will be described in detail.

### (Configuration Example of Base Station Control apparatus 100)

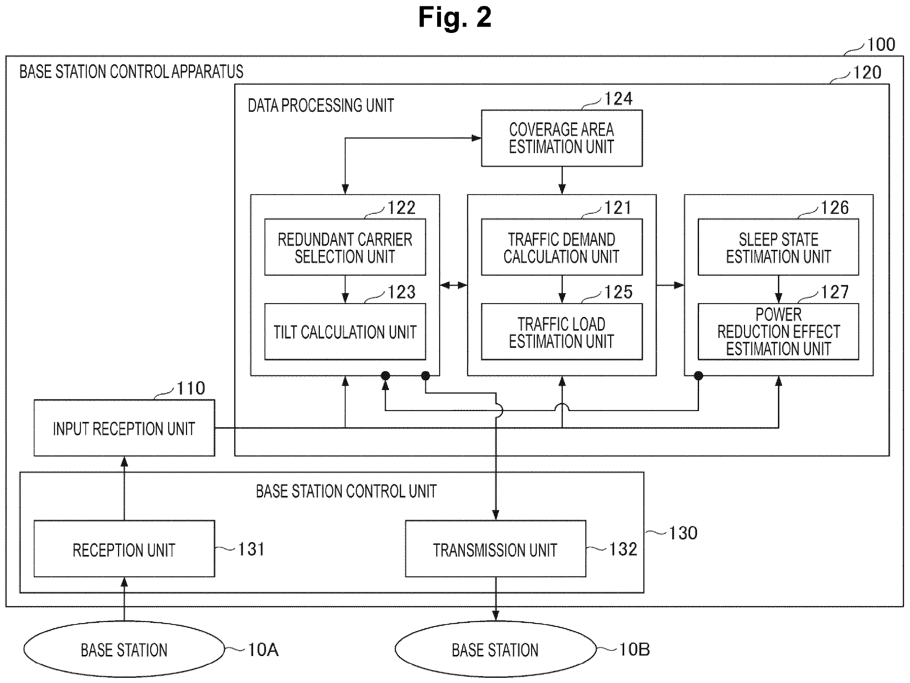

Fig. 2 shows a configuration diagram of the base station control apparatus 100 in the present embodiment. As shown in Fig. 2, the base station control apparatus 100 includes an input reception unit 110, a data processing unit 120, and a base station control unit 130.

Further, as shown in Fig. 2, the data processing unit 120 includes a traffic demand calculation unit 121, a redundant carrier selection unit 122, a tilt calculation unit 123, a coverage area estimation unit 124, a traffic load estimation unit 125, a sleep state estimation unit 126, and a power reduction effect estimation unit 127. The base station control unit 130 includes a reception unit 131 and a transmission unit 132.

The base station control apparatus 100 may be physically one apparatus or may be a system physically including a plurality of apparatuses. For example, "the input reception unit 110 + the data processing unit 120" may include one apparatus, and the base station control unit 130 may include one apparatus. Note that "the input reception unit 110 + the data processing unit 120" or "the data processing unit 120" may be referred to as a control apparatus.

Further, "the redundant carrier selection unit 122 + the tilt calculation unit 123" may be referred to as a "calculation unit". Furthermore, "the coverage area estimation unit 124 + the traffic load estimation unit 125 + the sleep state estimation unit 126 + the power reduction effect estimation unit 127" may be referred to as an "estimation unit". The function of each unit is as follows.

### <Base Station Control Unit 130>

The reception unit 131 and the transmission unit 132 of the base station control unit 130 can communicate with base stations. The reception unit 131 receives information from the base station, and the transmission unit 132 transmits information to the base station.

### <Input Reception Unit 110>

The input reception unit 110 receives "information regarding the base station/carrier" and an "observed value of a traffic demand" from the base station control unit 130.

The "information regarding the base station/carrier" includes, for example, the following information.
- Positions (latitudes, longitudes), heights (m), and orientations (°) of all antennas installed in the base station
- Vertical and horizontal beam widths (°) of a beam of each carrier
- A currently set tilt (°) of each carrier and a set of settable tilts
- A sleep/operating status of each carrier
- An amount of power consumption of each carrier per hour and an amount of power consumption (kWh) during sleep

The "observed value of the traffic demand" includes, for example, the following information.
- A traffic volume (bps) for each time period in each area
- The number of active users (people) for each time period in each area

Here, as the unit of the area, an area covered by one carrier, a section for every 100 m square, or the like is assumed. The unit of the time period is assumed to be one hour.

### <Traffic Demand Calculation Unit 121>

The traffic demand calculation unit 121 calculates a current estimated value and future predicted value of the traffic demand for each carrier on the basis of observed values of the traffic demand (traffic volume and the number of active users) from past to present which are regularly obtained from the input reception unit 110.

In the above calculation, the traffic demand calculation unit 121 estimates/predicts the traffic demand in consideration of observation errors included in the observed values.

A method of calculating the estimated value is not limited to a specific method, and for example, the exponential moving average or a state-space model (Kalman filter model) can be used. Further, a method of calculating the predicted value is not limited to a specific method, and for example, a prediction method using SARIMA (Reference Literature [4]) or a prediction method using LSTM (Reference Literature [5]) can be used.

### <Redundant Carrier Selection Unit 122>

The redundant carrier selection unit 122 selects redundant carriers on the basis of the information obtained from the input reception unit 110 and the coverage area estimation unit 124.

Specifically, the redundant carrier selection unit 122 transmits stop/operating information of carriers and information regarding a tilt currently set to an operating carrier to the coverage area estimation unit 124 and obtains information regarding a coverage area of each carrier from the coverage area estimation unit 124. Based on the obtained information, the redundant carrier selection unit 122 selects, as the redundant carriers, carriers that do not generate a coverage hole even if their coverage areas are excluded.

The redundant carrier selection unit 122 may select the redundant carriers by the following procedure in S100 and S200, for example.

S100: The redundant carriers are selected one by one from carriers having a small coverage area with priority given to a capacity carrier.

S200: The selection processing in S100 is repeated until "a coverage hole is generated by excluding the coverage area of a redundant carrier".

Only the redundant carriers selected by the redundant carrier selection unit 122 are set as targets of tilt control, and thus it is possible to prevent a coverage hole from being generated even in a case where an inappropriate tilt control solution is selected.

### <Overview of Tilt Calculation Unit 123>

The tilt calculation unit 123 first calculates an initial solution of a tilt control solution of the redundant carriers on the basis of the information obtained from the input reception unit 110 and the redundant carrier selection unit 122. Then, the tilt calculation unit 123 calculates feedback for the tilt control solution on the basis of information obtained from the traffic load estimation unit 125 and the power reduction effect estimation unit 127 for the tilt control solution. The tilt calculation unit 123 updates the tilt control solution on the basis of the feedback.

### <Algorithm of Tilt Calculation Unit 123>

As an algorithm used by the tilt calculation unit 123 for tilt calculation, for example, an algorithm based on the algorithm disclosed in Reference Literature [6] can be used. However, using the algorithm disclosed in Reference Literature [6] is merely an example, and other tilt calculation algorithms may be used. Even in a case where the algorithm based on Reference Literature [6] is used, the objective function used in the present embodiment is different from the objective function disclosed in Reference Literature [6].

The tilt calculation unit 123 obtains a tilt control solution that optimizes a preset objective function for the redundant carriers to be controlled. Specifically, first, an initial solution is randomly generated as the tilt control solution. Then, an optimum solution is searched for by updating the solution by using feedback of an objective function value.

### <Objective Function of Tilt Calculation Unit 123>

Next, a method of calculating the objective function value in the tilt calculation algorithm executed by the tilt calculation unit 123 will be described.

The tilt calculation unit 123 transmits the tilt control solution to the coverage area estimation unit 124 and obtains values regarding a traffic load and power reduction effect of each carrier (including the redundant carriers and the other carriers) from the traffic load estimation unit 125 and the power reduction effect estimation unit 127 via the coverage area estimation unit 124. By using those values, the objective function value is defined as follows.

Specifically, for example, the objective function value is set to "[the number of carriers estimated to be in a sleep state] - a × [the number of carriers whose traffic load exceeds a threshold]". The symbol "a" is a preset coefficient.

In the above example, the traffic load of each carrier is acquired from the traffic load estimation unit 125, and the "number of carriers estimated to be in the sleep state" is acquired from the power reduction effect estimation unit 127.

In a case where the above objective function value is used, the tilt calculation unit 123 obtains the tilt control solution that maximizes the objective function value. Regarding the coefficient "a", ensuring of the communication quality is assumed in the system according to the present embodiment, and thus a large value is set to "a" so as to reduce the [number of carriers whose traffic load exceeds the threshold].

By setting the objective function as described above, it is possible to achieve design of the objective function described above in "Point 3".

Further, when the information from the power reduction effect estimation unit 127 is used to calculate the objective function value, it is possible to perform tilt control without using information of actual sleep control. This makes it possible to "cope with the situation in which tilt control and sleep control operate independently" described above in "Point 1".

The tilt calculation unit 123 updates the tilt control solution such that the tilt control solution approaches the optimum solution, by using the objective function value calculated as described above as the feedback. After the control solution converges or is updated a sufficient number of times, the tilt calculation unit 123 transmits an optimum control solution among those control solutions obtained so far to the base station control unit 130 and changes the tilt of each carrier.

### <Coverage Area Estimation Unit 124>

The coverage area estimation unit 124 estimates the coverage area of each carrier from the stop/operating information of the carriers and the tilt set to the operating carrier. The coverage area estimation unit 124 assumes that a stopped carrier does not affect the coverage areas of the other carriers and estimates only the coverage area of the operating carrier.

Any existing method may be used as a method of estimating the coverage area. For example, it is possible to use the geometric coverage area estimation method disclosed in Reference Literature [6] or the highly accurate estimation method considering propagation loss and radio wave interference disclosed in Reference Literature [3].

The coverage area estimation unit 124 can change which estimation method to use according to a calculation time and a requirement of estimation accuracy. For example, in a case where a sufficient calculation time can be secured, the estimation method disclosed in Reference Literature [3] is used, and otherwise, the estimation method disclosed in Reference Literature [6] is used to estimate the coverage area.

In a case where the geometric coverage area estimation method disclosed in Reference Literature [6] is used, the coverage area may be defined as an "area where a sufficient received signal strength indicator (RSRP) can be obtained" from the viewpoint of radio wave quality.

In a case where the highly accurate estimation method considering propagation loss and radio wave interference disclosed in Reference Literature [3] is used, the coverage area may be defined as an "area where a sufficient throughput can be secured" from the viewpoint of the communication quality.

### <Traffic Load Estimation Unit 125>

The traffic load estimation unit 125 calculates the traffic volume and the number of active users accommodated by each carrier on the basis of the coverage area of each carrier obtained from the coverage area estimation unit 124 and the traffic demand of each area obtained from the traffic demand calculation unit 121.

Then, the traffic load estimation unit 125 estimates the traffic load of each carrier from those values, the traffic volume and the number of active users that can be accommodated by each carrier.

Note that the traffic load may be estimated by using only one of the traffic volume or the number of active users or by using both the traffic volume and the number of active users.

For example, in a case where the sleep model disclosed in Reference Literature [2] is used in the sleep state estimation unit 126, the number of active users is preferably used to calculate the traffic load. The traffic load used by the tilt calculation unit 123 may be different from the traffic load used by the sleep state estimation unit 126.

The traffic load estimation unit 125 calculates, for example, a value of the following (1) or (2) as the traffic load.
(1) [Traffic volume accommodated]/[traffic volume that can be accommodated]
(2) [The number of active users accommodated]/[the number of active users that can be accommodated]

As a value other than the above, the RB usage rate may be estimated and used as the traffic load.

In a case where the traffic demand given to the traffic load estimation unit 125 is time-series data that changes with time, the traffic load estimation unit 125 estimates a time-series traffic load.

### <Sleep State Estimation Unit 126>

The sleep state estimation unit 126 estimates whether each carrier is in a sleep or an operating state at the time of applying the tilt control solution on the basis of the estimated value of the traffic load at the time of applying the tilt control solution obtained from the traffic load estimation unit 125.

As described above, in the wireless communication system according to the present embodiment, each carrier autonomously sleeps on the basis of the sleep model. The sleep model is, for example, the sleep model based on the sleep threshold disclosed in Reference Literature [2].

The sleep state estimation unit 126 estimates the sleep/operating state of each carrier by using, for example, the sleep model. In a case where the estimated value of the traffic load is time-series data, the sleep state estimation unit 126 also estimates the sleep state in time series including transition of ON/OFF.

When the sleep state estimation unit 126 estimates the sleep state of each carrier and the tilt calculation unit 123 performs tilt calculation on the basis of the estimation result, it is possible to perform tilt control without using information of actual sleep control. This makes it possible to "cope with the situation in which tilt control and sleep control operate independently" described above in "Point 1".

### <Power Reduction Effect Estimation Unit 127>

The power reduction effect estimation unit 127 estimates a power reduction effect by sleep on the basis of the estimated sleep status of each carrier obtained from the sleep state estimation unit 126 and the information regarding the amount of power consumption of each carrier obtained from the input reception unit 110. An index calculated by the power reduction effect estimation unit 127 may be any type of index as long as it indicates the power reduction effect, and, for example, any one or a plurality of values among the following values (1) to (3) can be used.
(1) The number of carriers estimated to be in a sleep state
(2) Duration of the sleep state (in a case where the sleep state is time-series data that changes with time)
(3) An amount of power reduced by sleep

Note that the duration of the sleep state in the above (2) is, for example, the total duration of the sleep states of all the carriers.

Regarding the above (3), in a case where the sleep state is time-series data, the amount of power can be calculated from the amount of power consumption per hour and the duration of the sleep state. For example, "the amount of power consumption per hour × the duration of the sleep state" may be calculated for each carrier, and the sum of the "amount of power consumption per hour × the duration of the sleep state" of all the carriers may be used as the "amount of power reduced by sleep".

The value indicating the power reduction effect calculated by the power reduction effect estimation unit 127 is a value indicating performance of the tilt control solution obtained by the tilt calculation unit 123. The tilt calculation unit 123 receives the value as feedback and updates the tilt control solution on the basis of the feedback, thereby obtaining a solution closer to the optimum.

Hereinafter, operation examples of the base station control apparatus 100 having the above configuration will be described as Examples 1 to 3.

### (Example 1: Base Station Control Based on Current Traffic Demand)

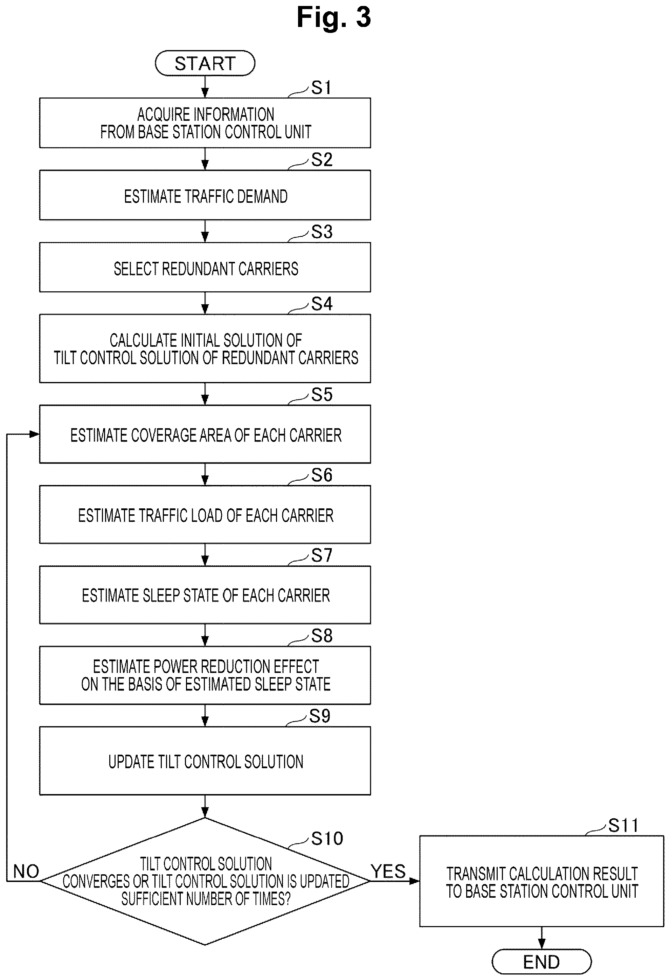

First, Example 1 will be described. In Example 1, the tilt calculation unit 123 calculates an optimum tilt control solution according to a current traffic demand that is regularly observed and gives a control instruction to the base station control unit 130 on the basis of the calculation result. In Example 1, a cycle of the control is set to about several minutes to one hour, and online control is periodically performed. Hereinafter, a flow of an operation of the base station control apparatus 100 will be described along a procedure in a flowchart of Fig. 3.

In S1, the input reception unit 110 regularly acquires information from the base station control unit 130.

In S2, the traffic demand calculation unit 121 estimates a current traffic demand from the information acquired in S1. In S3, the redundant carrier selection unit 122 selects redundant carriers on the basis of the information acquired in S1. In S4, the tilt calculation unit 123 calculates an initial solution of a tilt control solution of the redundant carriers on the basis of the traffic demand and a current sleep state of each carrier.

In S5, the coverage area estimation unit 126 estimates a coverage area of each carrier when the tilt control solution obtained in S4 or S9 is reflected.

In S6, the traffic load estimation unit 125 estimates the traffic load of each carrier on the basis of the estimated coverage area. In S7, the sleep state estimation unit 126 estimates the sleep state of each carrier on the basis of the traffic load. In S8, the power reduction effect estimation unit 127 estimates a power reduction effect on the basis of the estimated sleep state.

In S9, the tilt calculation unit 123 updates the tilt control solution on the basis of the traffic load information obtained from the traffic load estimation unit 125 and the power reduction effect (e.g. the number of carriers estimated to be in the sleep state) obtained from the power reduction effect estimation unit 127.

In S10, the tilt calculation unit 123 ends the calculation when the calculated tilt control solution converges or the tilt control solution is updated a sufficient number of times, and in S11, the tilt calculation unit transmits the calculation result (optimum control solution) to the base station control unit 130. If the calculation is not to be ended, the processing proceeds to S5.

### (Example 2: Base Station Control Based on Traffic Demand Prediction)

Next, Example 2 will be described. In Example 2, a control pattern of the tilt of each carrier is prepared in advance for each time period by using a future predicted value of the traffic demand. Then, when a current time is in the corresponding time period, a control instruction is given to the base station control unit 130. That is, the control instruction is given by using the tilt control solution according to the time period to which the current time belongs. In Example 2, a cycle of the control is set to about several hours, and offline control is performed for each period.

In Example 2, unlike Example 1, a calculation time in the coverage area estimation unit 124 can be sufficiently secured, and it is possible to perform highly accurate control in consideration of radio wave interference or the like.

A flow of an operation in Example 2 is basically the same as that in Example 1 (Fig. 3), but is partially different. Here, differences from Example 1 (Fig. 3) will be mainly described.

In Example 2, in S2, the traffic demand calculation unit 121 calculates a predicted value of the traffic demand for each time period of each carrier on the basis of the traffic demand that is regularly observed.

The tilt calculation unit 123 calculates a tilt control solution for each time period in the same procedure (S3 to S10) as that in Example 1 by using the demand for each time period and holds the control content.

Then, the tilt calculation unit 123 transmits the held control content to the base station control unit 130 according to the time period to which the current time belongs and gives a control instruction to the base station control unit (S11).

### (Example 3: Base Station Control in Which Examples 1 and 2 Are Combined)

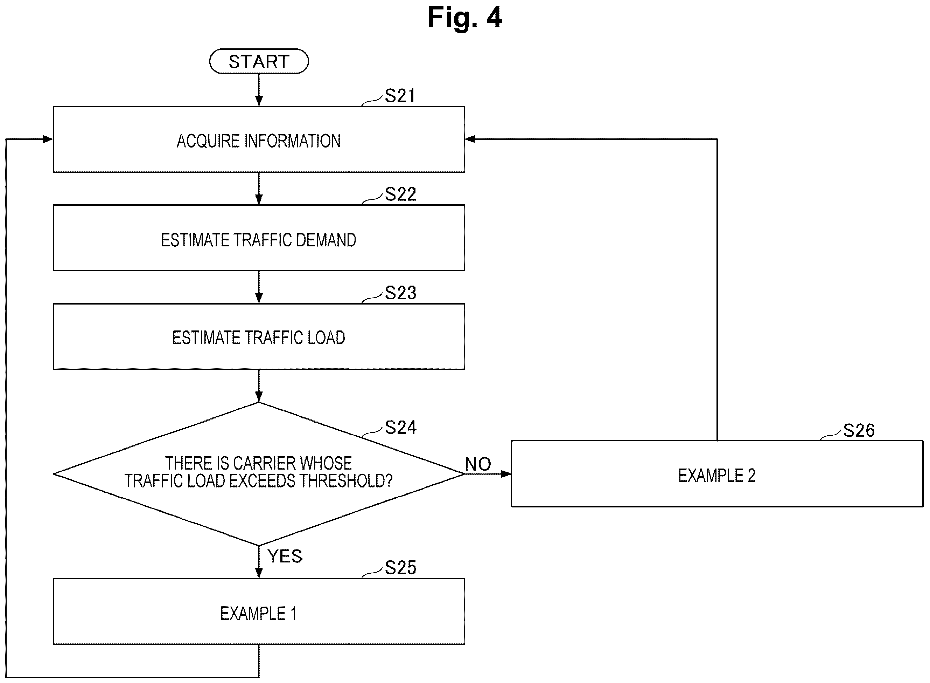

Next, Example 3 will be described. In Example 3, offline control based on traffic demand prediction is performed as in Example 2, and, in a case where the traffic demand suddenly fluctuates or the base station experiences a failure, online control similar to that of Example 1 is performed. This makes it possible to achieve both highly accurate control in consideration of radio wave interference or the like in normal times and coping with sudden demand fluctuations. A flow of an operation in Example 3 will be described with reference to a flowchart of Fig. 4.

In S21, the input reception unit 110 acquires observation information on a cycle of several minutes shorter than about several hours that is the control cycle in Example 2. In S22, the traffic demand calculation unit 121 estimates a current traffic demand of each carrier on the basis of the traffic demand. In S23, the traffic load estimation unit 125 estimates the traffic load of each carrier on the basis of the estimated traffic demand.

In S24, the data processing unit 120 determines whether there is a carrier whose traffic load estimated by the traffic load estimation unit 125 exceeds the threshold, and, if such a carrier exists, the processing proceeds to S25. In S25, the tilt calculation unit 123 calculates new control content in the same procedure as that in Example 1, notifies the base station control unit 130 of the calculation result, and gives a control instruction to the base station control unit.

If there is no carrier whose traffic load estimated by the traffic load estimation unit 125 exceeds the threshold, in S26, the tilt calculation unit 123 notifies the base station control unit 130 of the control content for each time period in the same processing procedure as that in Example 2 and gives a control instruction to the base station control unit. S21 to S24 are repeatedly executed while the same processing procedure as that in Example 2 is being performed, and, if there is a carrier whose traffic load exceeds the threshold, the control based on Example 1 is executed as necessary.

### (Hardware Configuration Example)

The base station control apparatus (or control apparatus) according to the present embodiment can be implemented, for example, by causing a computer to execute a program in which processing contents described in the present embodiment are described. Note that the "computer" may be a physical machine or a virtual machine on a cloud. In a case where a virtual machine is used, "hardware" described herein is virtual hardware.

The above program can be stored and distributed by being recorded on a computer-readable recording medium (e.g. portable memory). The above program can also be provided through a network such as the Internet or an electronic mail.

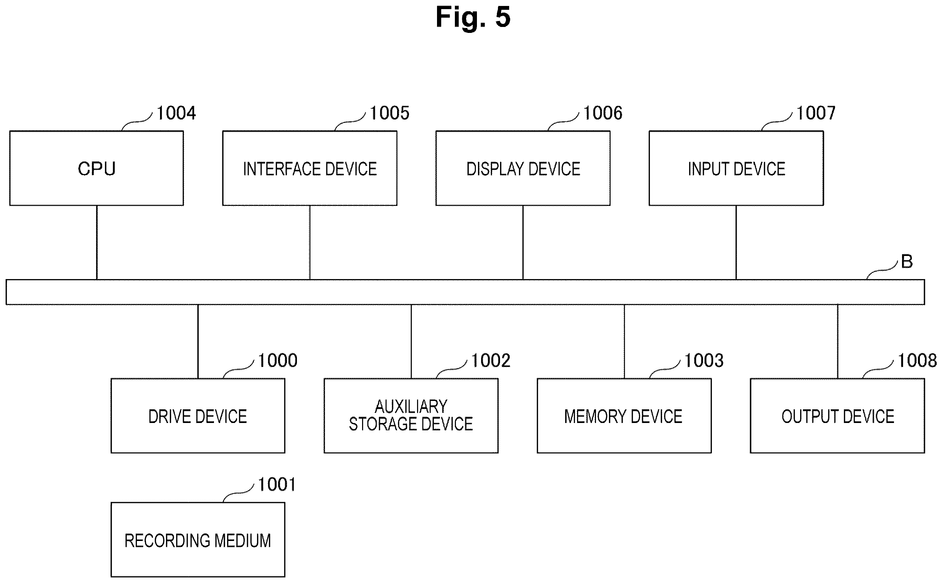

Fig. 5 shows a hardware configuration example of the above computer. The computer in Fig. 5 includes a drive device 1000, an auxiliary storage device 1002, a memory device 1003, a CPU 1004, an interface device 1005, a display device 1006, an input device 1007, an output device 1008, and the like, which are connected to each other by a bus BS.

The program for implementing the processing in the computer is provided by a recording medium 1001 such as a CD-ROM or a memory card. When the recording medium 1001 storing the program is set in the drive device 1000, the program is installed from the recording medium 1001 to the auxiliary storage device 1002 via the drive device 1000. However, the program is not necessarily installed from the recording medium 1001 and may be downloaded from another computer via a network. The auxiliary storage device 1002 stores the installed program and also stores necessary files, data, and the like.

In a case where an instruction to start the program is given, the memory device 1003 reads the program from the auxiliary storage device 1002 and stores the program. The CPU 1004 implements a function related to the base station control apparatus 100 (control apparatus) in accordance with the program stored in the memory device 1003. The interface device 1005 is used as an interface for connection to a network. The display device 1006 displays a graphical user interface (GUI) or the like, according to the program. The input device 1007 includes a keyboard and a mouse, a button, a touch panel, and the like and is used to input various operation instructions. The output device 1008 outputs a calculation result.

### (Supplementary Notes)

At least a control apparatus, a control method, and a program described in the following items are described in the present description.

### (Supplementary Note 1)

A control apparatus in a wireless communication system including a plurality of base stations that autonomously performs sleep control for each carrier, the control apparatus including:
an estimation unit that estimates whether or not each carrier is in a sleep state based on a traffic load estimated for each carrier; and
a calculation unit that, based on an estimation result by the estimation unit, calculates a tilt control solution indicating a tilt for each carrier to be controlled so as to reduce power consumption in the plurality of base stations.

### (Supplementary Note 2)

The control apparatus according to supplementary note 1, in which:
the estimation unit estimates a coverage area of each operating carrier; and
the calculation unit selects, as the carrier to be controlled, a redundant carrier that is a carrier that does not generate a coverage hole even in a case where a coverage area of the carrier is excluded.

### (Supplementary Note 3)

The control apparatus according to supplementary note 1 or 2, in which
the calculation unit calculates the tilt control solution so as to maximize an objective function value having a value indicating deterioration in quality as a penalty term in addition to a value indicating a power reduction effect.

### (Supplementary Note 4)

The control apparatus according to supplementary note 3, in which
the value indicating the deterioration in quality is a number of carriers whose traffic loads exceed a threshold.

### (Supplementary Note 5)

The control apparatus according to any one of supplementary notes 1 to 4, in which
the calculation unit calculates a tilt control solution for each time period in advance based on an estimation result for each time period by the estimation unit and gives a control instruction to a control unit by using a tilt control solution according to a time period to which a current time belongs.

### (Supplementary Note 6)

A control method executed by a control apparatus in a wireless communication system including a plurality of base stations that autonomously performs sleep control for each carrier, the control method including:
an estimation step of estimating whether or not each carrier is in a sleep state based on a traffic load estimated for each carrier; and
a calculation step of, based on an estimation result in the estimation step, calculating a tilt control solution indicating a tilt for each carrier to be controlled so as to reduce power consumption in the plurality of base stations.

### (Supplementary Note 7)

A program for causing a computer to function as each unit of the control apparatus according to any one of supplementary notes 1 to 5.

Although the present embodiment has been described above, the present invention is not limited to specific embodiments, and various modifications and changes can be made within the scope of accompanying claims.

### (Reference Literatures)

[1] Y. Gao, Y. Li, H. Yu, X. Wang and S. Gao, "Energy efficient joint optimization of electric antenna tilt and transmit power in 3GPP LTE-Advanced: A system level result", 2013 IEEE 9th International Colloquium on Signal Processing and its Applications, 2013, pp. 135-139, doi:10.1109/CSPA.2013.6530029.
[2] J. H. Noh, B. Lee and S. J. Oh, "User-Number Threshold-Based Base Station On/Off Control for Maximizing Coverage Probability", in IEEE Transactions on Vehicular Technology, vol. 71, no. 3, pp.3214-3228, March 2022, doi: 10.1109/TVT.2022.3141592.
[3] N. Dandanov, H. Al-Shatri, A. Klein, and V. Poulkov, "Dynamic Self-Optimization of the Antenna Tilt for Best Trade-off Between Coverage and Capacity in Mobile Networks", Wirel. Pers. Commun., vol. 92, no. 1, pp. 251-278, 2017.
[4] Luo, X., Niu, L. & Zhang, S. An Algorithm for Traffic Flow Prediction Based on Improved SARIMA and GA. KSCE J Civ Eng 22, 2018, pp. 4107-4115.
[5] H. D. Trinh, L. Giupponi and P. Dini, "Mobile Traffic Prediction from Raw Data Using LSTM Networks", 2018 IEEE 29th Annual International Symposium on Personal, Indoor and Mobile Radio Communications (PIMRC), 2018, pp. 1827-1832, doi: 10.1109/PIMRC.2018.8581000.
[6] Masayoshi Iwamoto, Akito Suzuki, Masahiro Kobayashi, "PSO-based Antenna Tilt Control Method for Cell Outage Compensation in Cellular Networks", IEICE Technical Report vol. 121, no. 324, IN2021-24, pp. 1-6, January 2022

### Reference Signs List

- 100: Base station control apparatus
- 110: Input reception unit
- 120: Data processing unit
- 121: Traffic demand calculation unit
- 122: Redundant carrier selection unit
- 123: Tilt calculation unit
- 124: Coverage area estimation unit
- 125: Traffic load estimation unit
- 126: Sleep state estimation unit
- 127: Power reduction effect estimation unit
- 130: Base station control unit
- 131: Reception unit
- 132: Transmission unit
- 1000: Drive device
- 1001: Recording medium
- 1002: Auxiliary storage device
- 1003: Memory device
- 1004: CPU
- 1005: Interface device
- 1006: Display device
- 1007: Input device
- 1008: Output device

## Claims

1. A control apparatus in a wireless communication system including a plurality of base stations that autonomously performs sleep control for each carrier, the control apparatus comprising:
an estimation unit that estimates whether or not each carrier is in a sleep state based on a traffic load estimated for each carrier; and
a calculation unit that calculates, based on an estimation result by the estimation unit, a tilt control solution indicating a tilt for each carrier to be controlled so as to reduce power consumption in the plurality of base stations.

2. The control apparatus according to claim 1, wherein
the estimation unit estimates a coverage area of each operating carrier and
the calculation unit selects, as the carrier to be controlled, a redundant carrier that is a carrier that does not generate a coverage hole even in a case where a coverage area of the carrier is excluded.

3. The control apparatus according to claim 1, wherein
the calculation unit calculates the tilt control solution so as to maximize an objective function value having a value indicating deterioration in quality as a penalty term in addition to a value indicating a power reduction effect.

4. The control apparatus according to claim 3, wherein
the value indicating the deterioration in quality is a number of carriers whose traffic loads exceed a threshold.

5. The control apparatus according to any one of claims 1 to 4, wherein
the calculation unit calculates a tilt control solution for each time period in advance based on an estimation result for each time period by the estimation unit and gives a control instruction to a control unit by using a tilt control solution according to a time period to which a current time belongs.

6. A control method executed by a control apparatus in a wireless communication system including a plurality of base stations that autonomously performs sleep control for each carrier, the control method comprising:
an estimation step of estimating whether or not each carrier is in a sleep state based on a traffic load estimated for each carrier; and
a calculation step of calculating, based on an estimation result in the estimation step, a tilt control solution indicating a tilt for each carrier to be controlled so as to reduce power consumption in the plurality of base stations.

7. A program for causing a computer to function as each unit of the control apparatus according to any one of claims 1 to 4.
